# EUROPEAN PATENT APPLICATION

(11) **EP 3 171 047 A1**
(43) Date of publication of application: **24.05.2017**
(21) Application number: 15003286.0
(22) Date of filing: 17.11.2015
(51) Int. Cl.: F16C 37/00, F16C 17/02, F16C 17/04

(54) **GAS LUBRICATED FOIL BEARING WITH SELF-INDUCED COOLING**

(71) Applicant: Brandenburgische Technische Universität Cottbus-Senftenberg, 03046 Cottbus (DE)
(72) Inventor: Prechavut, Nontavut, 03046 Cottbus (DE); Prinzler, Michael, 03044 Cottbus (DE); Berg, Heinz-Peter, 03052 Cottbus (DE)
(74) Representative: Hertin und Partner Rechts- und Patentanwälte PartG mbB

(57) **Abstract**

The invention relates to a foil gas bearing assembly for supporting a rotatable shaft. In one aspect the invention relates to a journal bearing assembly that comprises foils (3, 4) such that the rotating shaft is laterally supported by a lubricant gas layer (10). To induce cooling of the journal bearing assembly during rotation of the shaft openings (7) are provided in an ascending ramp (8) of a top foil (3) and a cavity (17) is formed between the ascending ramp (8) of a top foil (3) and a descending ramp (9) of a top foil (3). Part of the lubricating gas (10) passes through the openings (7) and flows in the space (14) underneath the top foil (3) and ambient gas (13) joins the lubricant gas (10) at the bearing cavity (17). Thereby damages due to heat induced deformations of the mechanical elements are prevented. In another aspect the invention relates to a thrust bearing assembly for an axial support of a rotating shaft by means of a thrust runner in which an assembly of foils promotes a self-induced cooling.

## Description

### BACKGROUND OF THE INVENTION

The invention relates to a foil gas bearing assembly for supporting a rotatable shaft. In one aspect the invention relates to a journal bearing assembly that comprises an assembly of foils such that the rotating shaft is laterally supported by a lubricant gas layer. The assembly of the foils leads to a self-induced cooling of the journal bearing assembly once the shafts rotates. Thereby damages due to heat induced deformations of the mechanical elements are prevented. In another aspect the invention relates to a thrust bearing assembly for an axial support of a rotating shaft by means of a thrust runner in which an assembly of foils promotes a self-induced cooling.

Fluid or gas bearings are utilized in a number of different devices in mechanical engineering. For instance in turbomachines journals rotate at high speeds and constitute a load for the mechanical elements. To support high speed rotating shafts foil gas bearings have been developed. For a lateral support of a rotating shaft journal bearings comprise an outer rigid supporting bearing cartridge and an inner assembly of foils. In particular the foil gas journal bearings comprise a foil, which may be referred to as a top foil that receives the rotatable shaft. In general underneath the top foil an assembly of intermediate foils constitute an elastic layer that may dampen local deformations due to lateral movements of the shaft within the journal bearing. Between the surface of the shaft and the top foil remains only a very thin circumferential gap. It is even possible to choose a bearing such that the diameter of the shaft is intentionally larger than the bearing, so that the shaft is initially pressed against the top foil. For both cases once the shaft rotates a hydrodynamic pressure is generated between the surface of the shaft and the top foil as the ambient gas is compressed into the gap. The gas within the gap flows along the rotational direction of the shaft acting as a lubricant and is therefore referred to as a lubricant gas. The hydrodynamic pressure of the flowing lubricant gas constitutes a supportive layer that mediates the load of the shaft to the top foil, which is supported by elastic intermediate foils on an inner rigid bearing cartridge. Due to the lubricant gas a direct friction between the surfaces of the shaft and top can be avoided.

However high rotational speeds can lead to a rising temperature of the lubricant gas and a heating of the entire bearing assembly. Heat induced deformations of the foil gas bearing may increase this effect and lead to a "thermal runaway" situation and mechanical damages. In the prior art multiple schemes have therefore been developed to ensure a cooling of the foil gas bearing and/or the shaft.

In US 6 286 303 B1 the use of a showerhead with an inlet for cooling air is disclosed that delivers a gas of colder temperature to the inner surface of the journal, thereby cooling the entire foil gas bearing and shaft assembly.

In EP 0186 263 A2 a cooling for a foil thrust bearing is provided by flow directing means within the intermediate foils to enable the provision of cooler gas and/or fluid to the interface of two oppositely rotating surfaces.

In EP 0 303 189 A2 a foil gas bearing assembly is described in which slots extend within the foils along the axial direction of the shaft and thereby provide an axial flow of fluid across the foils.

Cooling devices and methods of the prior art actively force gas of lower temperature towards the bearing or provide means for an axial guidance of lower temperature gas along the shaft. The devices and methods of the prior art either require additional energy for forcing the cooling gas or an expensive and elaborate construction. An effective passive cooling system by simple means of construction of a foil gas bearing has not been disclosed in the prior art.

### SUMMARY OF THE INVENTION

One objective of the present invention was to overcome the disadvantages of the prior art and to provide a foil gas bearing assembly for supporting a rotatable shaft that provides an efficient self-induced passive cooling during the rotation of the shaft. Another aspect of the invention was to provide a foil gas bearing assembly that is simple to construct and enables a particularly well elastic support for a shaft rotating at high speeds, while minimizing deleterious effects to mechanical components due to heating.

The objective is achieved by a journal bearing assembly and a thrust bearing assembly according to the independent claims. The dependent claims refer to preferred embodiments of the journal bearing assembly and the thrust bearing assembly.

In one embodiment the invention therefore relates to a journal bearing assembly for supporting a rotatable shaft, comprising a plurality of foils, comprising at least one top foil shaped to receive the rotatable shaft and at least one intermediate foil outward the top foil, and a bearing cartridge with an inner concave surface enclosing the intermediate foil, wherein the top foil exhibits at least one opening, in a section of said top foil, such that the opening displays an opening angle of 0° to 60° with respect the surface of the rotatable shaft.

The journal bearing assembly is constructed to support a rotatable shaft. The journal bearing is therefore preferably understood as a bearing assembly for supporting a rotatable shaft and thus a sliding surface. Herein the rotatable shaft preferentially has a cylindrical geometry. For a cylindrically shaped shaft a top foil shaped to receive the rotatable shaft, refers to a top foil that spans over a substantial area a cylindrical surface matching the outer diameter of the rotatable shaft. Preferentially between the top foil and the rotatable shaft a thin gap remains. The top foil is therefore shaped to receive the shaft, but does not have to touch the outer surface of the shaft. Moreover the top foil may be assembled in such a way that it receives the shaft not over its entire surface, but only over a part of the surface. The part of the surface of the top foil which receives the shaft and being thus in close proximity with the surface of the shaft is referred to as a bearing segment. Outward the top foil the at least one intermediate foil is situated. The intermediate foil can have different shapes. Preferentially however the intermediate foil is shaped in such a way that the layer spanned by the intermediate foil possesses a larger radial height than the layer spanned by the top foil. Moreover preferentially the intermediate foil acts elastically along its radial height. On the outside of the intermediate foil a rigid bearing cartridge is situated. Preferentially the inner surface of the rigid bearing cartridge has a similar shape as the outer surface of the rotatable shaft. Hence for a cylindrically rotatable shaft the inner surface of the bearing cartridge is cylindrically. The top foil and the intermediate foils constitute therefore a layer of foils in between the outer surface of the rotatable shaft and the inner surface of the rigid bearing cartridge. Advantageously both foil layers serve different purposes. The inner surface of the top foil is sufficiently smooth to receive the rotatable shaft. During the rotation of the shaft a hydrodynamic pressure is created that leads to an establishment of a gas layer of higher pressure in between the surface of the shaft and the top foil. This layer of gas is dragged along with surface of the shaft due to adhesion. The layer is referred to as the lubricating gas, which possesses a high tangential velocity in the rotating direction of the shaft. Advantageously due to the lubrication gas layer the surface of the shaft does not directly impede upon the top foil layer. In this way a particular friction-reduced bearing maybe achieved. However, lateral movements of the shaft are transmitted via the lubricating gas layer to the top foil. Advantageously, the intermediate foil can dampening these movements if constructed elastically along its height. The assembly of the foils in two layers, at least one top foil and at least one intermediate foil, has therefore the advantage that a thin layer of lubricating gas formed by the bearing segments of the top foil can reduce friction, while a thicker layer of at least one intermediate foils can serves as a mechanical damping element between the rigid shaft and the bearing cartridge. In addition the intermediate foil preferably provides flexibility and compliancy for lateral movements of the shaft and assures a stable maintenance of the lubricant gas layer. However, for high-speed rotating shafts the preferentially thin lubricating gas could potentially heat up considerably.

It was surprising that by means of an opening between the top foil and the intermediate foil with an opening angle of 0° to 60° with respect to the surface of the shaft an efficient self-induced cooling for the bearing assembly is achieved. Advantageously the opening thus possess an angle of 0° to 60° with respect to the tangential velocity of the flowing lubricating gas. Preferably the section of the top foil that contains the opening is to this end tilted such that it is ascending along the rotational direction and the direction of the tangential lubricant gas flow. As disclosed herein in an opening angle of 0° degrees refers to an opening within a section of a top foil that is perpendicular with respect to the tangential flow of the lubricating gas. An opening angle of 90°, which is not preferred according to the invention, would refer to an opening in the top foil in a section that is parallel to the surface of the rotatable shaft and thus the tangential velocity of the lubricating gas flow. Advantageously the at least one opening within the top foil with opening angles between 0° and 60° guides part of the lubricating flowing gas to into the space of the layer of the intermediate foil, thus below the top foil. In addition to the lubricant gas flow layer therefore a gas flow with in the layer of the intermediate foils is generated and referred to as the intermediate gas flow layer. The physical law of continuity and mass conservation requires that if part of the lubricating gas leaves the layer between the top foil and the shaft to join the intermediate gas flow, it has to be replaced by newly streaming in gas. Therefore due to the openings according to the invention cooler ambient gas continuously streams into the gap between the top foil and the shaft joining the flow of lubricating gas. In comparison to bearing devices of the prior art thereby an efficient self-induced cooling is achieved. Such an efficient self-induced cooling cannot be achieved with openings with an opening angle of roughly 90°, since in in this case the lubricating gas hardly enters the layer of the intermediate foil. Advantageously the cooling due to the openings according to the invention does not require any additionally devices or energy to force the cooler ambient air into the lubricating layer. Instead the energy of the rotating shaft is exploited to draw the cooling gas into the lubricating gas. A deleterious heating of the lubricating gas can be thereby avoided. In particular the self-induced cooling is also more efficient than cooling induced for instance by axially guiding cold gas along axial opening of the intermediate foils as described in the prior art.

In a preferred embodiment the journal bearing assembly is characterized by an opening angle of the openings with respect to the surface of the rotatable shaft between 10° to 50° and preferably between 20° and 40°. Openings within the top foil with these particularly preferred opening angles guide an optimal amount of the flowing lubricating gas into the layer of the intermediate foil. These opening angles constitute a particular optimal compromise for not guiding too much of the lubricating gas into the layer of intermediate foils, which may disturb the lubricating flow, while guiding a sufficient amount of lubricating gas into the layer of intermediate foils to achieve an effective cooling of the bearing.

In a preferred embodiment of the invention the journal bearing assembly is characterized in that it comprises two or more top foils each exhibiting a top foil trailing section, comprising a descending ramp that forms an angle of 30° to 90° with the surface of the rotatable shaft and a top foil leading section, comprising an ascending ramp that forms an angle of 30° to 90° with the surface of the rotatable shaft, wherein the ascending ramp comprises the opening. By assembling multiple top foils in the described manner the openings connecting the lubricating gas to the space within the intermediate foil layer are particularly effective. Using two or more top foils with the described top foil trailing section and top foil leading section advantageously creates along the circumference of the shaft regions of a bearing segment and a bearing cavity. Wherein the bearing segment is the region of the top foil, which is characterized by a small gap between the top foil and the surface of the shaft and the bearing cavity refers to a space created by the descending ramp and ascending ramp. This configuration assures a particular stable lubricant gas flow within the bearing segments, while allowing cool ambient air to join the lubricant gas flow preferably at the locus of the bearing cavity. Moreover, the descending ramp of the top foil trailing section reduces turbulence in the lubricating gas flow and guides part of the lubricant flow efficiently into the opening of the ascending ramp, while another part enters the gap in the bearing segment. Herein, an inclination angle of the ascending ramp of the top foil leading section of 30° leads to an opening angle of 60°. Similarly an inclination angle of the ascending ramp of the top foil leading section of 90° leads to an opening angle of 0°. Embedding the openings into an ascending ramp at the top foil leading section equally reduced turbulence and increases the cooling effect, while maintaining a supportive lubricant gas layer. In a particularly preferred embodiment the descending ramp of the top foil trailing section may overlap with the ascending ramp of the top foil leading section to optimize the part of lubricant gas joining the intermediate gas flow for efficient cooling. The size of the bearing cavity with respect to the bearing segment can be therefore advantageously optimized for a particularly efficient self-induced cooling and high load support of the rotatable shaft. Larger bearing cavities lead to smaller bearing segments and may therefore reduce the load capacity of the bearing. Preferably the load capacity of the bearing is governed by the bearing force exerted by the journal bearing assembly onto the shaft, which is equal to the hydrodynamic pressure times the total surface of the bearing segments. However for smaller bearing cavities it may be that less lubricant gas enters the intermediate foil layer as the influence of the drag force of rotating shaft dominates. In this case most of lubricant gas flow stream from one bearing segment to the next, which may reduce the self-induced cooling effect.

In a further preferred embodiment the journal bearing assembly according to the previous claim is characterized in that the ascending ramp of the top foil comprises two or more openings aligned in a direction along the cylindrical axis of the rotatable shaft. In this preferred embodiment of the journal bearing assembly a particular efficient self-induced cooling can be achieved while supporting rotating shafts of high mechanical load.

In a further preferred embodiment the journal bearing assembly is characterized in that the opening has a length to width ratio between 10:1 and 2:1, wherein the length of the opening is the dimension of the opening along the direction of the cylindrical axis of the rotatable shaft. The preferred length to width ratio yields a surprisingly efficient cooling effect without disturbing the lubricant gas flow.

In a further preferred embodiment the journal bearing assembly is characterized in that the top foil is made of a nickel-based super alloy preferentially containing a chemical selected from the group comprising chromium, iron, cobalt, molybdenum, tungsten, tantalum, aluminum, titanium, zirconium, niobium, rhenium, yttrium, vanadium, carbon, boron and/or hafnium. These materials are particularly well suited for the self-induced cooling as they provide a particular well stability of the top foil assembly, including the openings within sections of the one or more top foils. Moreover the aforementioned materials are particularly suited for applications at high temperature. Most preferentially the top foil is made of INCONEL^{®} alloy X-750. It may further be preferred to additionally coat the top foil with a solid lubricant such as polytetrafluoroethylene and/or molybdenum disulfide. It may also be preferred to treat the surface of the shaft with chrome coating, plasma coating or other types of coating to harden the surface. These coatings reduce the wear between top foil and the shaft additionally in particular at the starting and stopping of the rotation. At low rotations speeds the hydrodynamic pressure may not be sufficient to provide a stable lubricating gas layer. Therefore the use of solid lubricant coatings reduces particularly well degradations at the surface of the shaft and/or top foil and prolongs the lifetime of the bearing assembly.

The aforementioned INCONEL^{®} alloy X-750 is a particularly preferred nickel-based super alloy, which has evolved as descriptive term. The characterization of the particularly preferred nickel-based super alloy as a tradename is unambiguous and clear. The INCONEL^{®} alloy X-750 refers to a nickel-chromium alloy manufactured by the company special metals and was specified and published on the data sheet of the special metals in October 2015. In October 2015, the technical data sheet could be downloaded from http://www.specialmetals.com/documents/Inconel%20alloy%20X-750.pdf.

In a further preferred embodiment the journal bearing assembly is characterized in that the intermediate foil is a corrugated foil and constitutes an elastic layer between the top foil and the bearing cartridge. Preferentially a corrugated foil is a foil that possesses elevations and depressions along the height of the layer formed by the intermediate foil. Herein the height of the layer of the intermediate foil refers to the radial extension with respect to the rotatable shaft. Particularly preferred the corrugated foil possesses bumps, such corrugated foils are therefore also referred as bump foils. Thereby the inner surface of the intermediate foil layer, the top of a bump, touches the outer surface of the top foil. A movement of the shaft, which forces the top foil to deflect, can advantageously be damped by a local deformation of the corrugated foil. For instance a bump may deflect and provide an elastic restoring force. Advantageously the corrugated architecture of the intermediate foils provides a particularly potent elasticity to the layer of the intermediate foil along its height. Thereby lateral movements are dampened and the shaft is kept stably a centered axial position. Even shock loads, i.e. a sudden drastic increase in the load of the supported shaft, can be compensated surprisingly well by corrugated foils in particular comprising a number of bumps.

In a further preferred embodiment the journal bearing assembly is characterized in that the corrugated foil comprises and/or two or more corrugated foils form at least one slit, which extends circumferentially along the surface of the bearing cartridge, wherein the opening is aligned with said slit. Corrugated foils have particular advantageous elastic properties as explained above. Moreover the architecture of an intermediate foil as a corrugated foil preferably a bump foil is particularly beneficial for the self-induced cooling if a circumferential slit is present. Such a slit is preferably formed by edging out a line in a corrugated foil, such that the slit is void of material of the intermediate foil. A slit may however also be formed by enforcing the corrugated foil to be flat on the inner surface of the bearing cartridge along a circumferential line that forms the slit. Moreover a slit may also be formed by assembling two or more corrugated foils axially on top of each other on the inner surface of the bearing cartridge, such that a space void of the corrugated foils remains and form the slit. A feature of a slit according to this preferred embodiments is that it forms an open space that extends circumferentially within the layer of corrugated foils. Since the opening within the top foil is aligned with the slit, part of the lubricant gas can enter the layer of the corrugated foils trough the opening and is subsequently guided along the slit. Such an arrangement reduces turbulence in the flow pattern of the intermediate gas flow and increases the cooling effect. Since the architecture of bump foils results preferably in axial openings formed underneath the bumps, the intermediate gas however exits the layer of corrugated foils. This is in particular the case for the preferred embodiment in which a descending ramp at the trailing section of the top foil prevents the intermediate gas flow to enter the intermediate foil layer underneath the next bearing segment. Due to the open configuration of the corrugated foil the intermediate gas mixed particularly well with the cooler ambient air and prevents a heating of the intermediate foil layer.

In a further preferred embodiment the journal bearing assembly is characterized in that the intermediate foil is made of a material selected from a group comprising a nickel-based super alloy preferentially containing an element selected from the group comprising chromium, iron, cobalt, molybdenum, tungsten, tantalum, aluminum, titanium, zirconium, niobium, rhenium, yttrium, vanadium, carbon, boron and/or hafnium and more preferentially the intermediate foil is made of INCONEL^{®} alloy X-750. These materials provide a particularly pronounced elasticity to the intermediate foil, in particular for an intermediate foil that is a corrugated foil preferably a bump foil. Moreover the aforementioned materials increase the stability of the foil assembly even at high temperatures.

In another preferred embodiment the journal bearing is characterized in that an intermediate foil leading section comprises an intermediate foil fixation area, which is flat, and the top foil leading section comprises a top foil fixation area, which is flat, and the top foil fixation area and the intermediate foil fixation area are fixed to the inner surface of the bearing cartridge. A flat fixation of the leading sections of the top foil and the intermediate foil to the inner surface of the bearing cartridge constitutes a particularly stable manner for attaching the foil assembly to the bearing cartridge. Such a flat fixation of the top foil leading section and the intermediate foil leading section may be achieved preferentially by spot-welding the foils to the inner surface. Other means of fixation are however also preferentially possible as long as they can ensure a flat fixation of the foils to the inner surface.

Moreover in a preferred embodiment the invention relates to a preferred method for producing a journal bearing assembly according to the invention comprising the steps of:
a) the one or more top foils are cut, while the top foil is flat using laser cutting and/or etching
b) the one or more intermediate foils are cut, while the intermediate foil is flat using laser cutting and/or etching
c) the one or more top foils are shaped to receive the cylindrical shaft by pressing, bending and/or rolling
d) the one or more intermediate foils are pressed and/or stamped against a die, preferably a die configured to shape the intermediate foil to a corrugated foil
e) the one or more intermediate foils and the one or more top foils are fixed to the cartridge preferably by spot welding using suitable jigs.

In the manufacturing of the bearing assembly it may further be desired to heat treat the foils. This particularly the case if for instance the foils are made out of INCONEL^{®} alloy X-750. Thereby a precipitation hardening can be achieved resulting in an increased strength of the foils. It may further be preferred to coat the top foil by a solid lubricant such as polytetrafluoroethylene and/or molybdenum disulfide. A person skilled in the art will know how to perform the above mentioned method steps to produce a preferred journal bearing assembly. For details of the manufacturing steps a person skilled in the art may further consult publications on the manufacturing of foil gas bearings such as DellaCorte et al. Tribology Transactions, 51:3, 254-264 (2008).

Moreover the invention relates to the usage of a journal bearing assembly according to the invention and preferred embodiments thereof for supporting a rotatable shaft preferably for supporting a rotatable shaft in an air cycle machine, a turbocharger, a microelectromechanical systems, a turboexpander, an aircraft auxiliary power unit, a vehicle range extender, an engine, a compressor, a blower, a milling spindle, a grinding spindle and/or a turbomachine preferably a steam turbine and/or a micro gas turbine. Advantageously the journal bearing according to the invention is capable of supporting high loads of rotatable shafts due to a lubricant gas film forming in between the top foil and the surface of the shaft and the elastic support of the intermediate foil. In comparison to rigid gas bearing of the prior art the journal bearing assembly is therefore more stable against thermal deformation and geometrical errors of the device comprising the rotatable shaft. Moreover as the journal bearing assembly constitutes a gas bearing it is advantageously free of oil, which is used in conventional rigid journal bearings. Therefore by using gas as a lubricant the devices into which the journal bearings assembly is integrated do not need additional oil systems such as pumps and/or oil filters. This advantageously further ensures lower maintenance cost, lighter weight, reduced emission and the avoidance of any oil leakage, which is particularly desired for processes that do not tolerate oil contamination as for instance in the food and/or electronics industries. Furthermore due to the foil assembly a heating of the journal bearing assembly is prevented even for particularly fast rotating shafts. Moreover the journal bearing assembly composes a simple construction scheme and is light weighted. Therefore the journal bearing assembly according to the invention is particularly well suited for applications in mechanical engineering, wherein fast rotating shafts shall be securely and efficiently supported. Therefore the journal bearing assembly according to the inventions improves in particular the working efficiency of devices such air cycle machines, turbochargers, microelectromechanical systems, turboexpander, aircraft auxiliary power units, vehicle range extenders, engines, compressors, blowers, milling spindles, grinding spindles and/or turbomachines. The usage of the journal bearing assembly according to the invention in these devices improves the life time, the productivity and the energetic efficiency of these devices. For instance the devices can perform with high productivity (and high rotational speeds of the shafts) without the risk of damage due to a thermal runaway. Furthermore, energetic costs can be reduced as the self-induced cooling of the device does not necessitate an active enforcement of cooling gas to the journal bearing.

While the aforementioned embodiments of the invention have been disclosed with relation to a journal bearing assembly it is emphasized that the technical teaching according to the invention may equally apply to other types of bearings.

Accordingly the invention also relates to a bearing assembly for supporting a rotatable component, comprising a stationary mounting member and a plurality of foils, comprising at least one top foil shaped to receive the rotatable member and at least one intermediate foil situated in between the rotatable member and the stationary mount member characterized in that the top foil exhibits at least one opening, in a section of said top foil, such that the opening displays an opening angle of 0° to 60° with respect the surface of the rotatable member.

The journal bearing assembly disclosed herein therefore constitutes a preferred embodiment of the above general idea of the invention. In case of the journal bearing assembly the rotatable member is a rotatable shaft and the stationary mounting member corresponds to the cartridge. The cartridge is a stationary mounting member since it is preferably attached to non-rotating components of the system or apparatus in which the shaft rotates.

The advantageous self-induced cooling, which is described in detail for the journal bearing assembly, can also be exploited for other types of bearings, with foil assemblies, wherein a top foil comprises an opening with an opening angle of 0° to 60° with respect to the surface of the rotatable member. The principle of the self-induced cooling relies on the guidance of a lubricant gas flow into the layer of an intermediate foil. In bearing assemblies the lubricant gas flow occurs between the top foil preferably the bearing segments of the top foil and the surface of a rotatable member, which in case of the journal bearing assembly is the surface of the rotatable shaft. Advantageously the layer of lubricant gas between a top foil and a rotatable member reduces the friction. However due to the rotation of the rotatable member the lubricant gas flow may heat up and result in thermal damages to the components. According to the invention this can be advantageously prevented by guiding the lubricant gas flow into the layer of intermediate foils. Due to the law of continuity the lubricant gas that is leaving the layer between the top foil and the surface of the rotatable member is replaced by ambient gas, which is preferably cooler than the lubricant gas. As presented herein the amount of lubricant gas that is guided into the intermediate foil layer depends on the angle of the opening in the top foil with respect to the direction of the lubricant gas flow. For bearings in the context of this invention the lubricant gas flows preferably along the surface of the rotatable member by which it is dragged. This relation between the flow direction of the lubricant gas and the surface of the rotatable member allows to construct bearing assemblies with advantageous opening angles in relation to the surface of the rotatable member. For a journal bearing assembly the opening angle is as detailed above defined with respect to the cylindrical surface of the journal.

As is clear from the previous passage the teaching of the invention is also applicable to other type of bearing. In particular in case of a thrust bearing the rotatable member corresponds to the thrust runner and the stationary mounting member corresponds to the thrust plate.

In another embodiment the invention therefore relates to a thrust bearing assembly for supporting a rotatable shaft, comprising a thrust runner attached to the rotatable shaft, a thrust plate and a plurality of foils, comprising at least one top foil shaped to receive the thrust runner and at least one intermediate foil situated in between the top foil and the thrust plate, characterized in that the top foil exhibits at least one opening, in a section of said top foil, such that the opening displays an opening angle of 0° to 60° with respect the surface of the thrust runner.

While journal bearings are suited to support lateral movements of a rotating shaft. Thrust bearings are designed to support axial load and/or movements of a rotating shaft. To this end a thrust runner is fixed to the rotatable shaft. Preferably a thrust runner has the shape of a disc with an inner hole to receive the shaft. Since the thrust runner is attached to the shaft it rotates with said shaft. For a desired axial support the thrust runner has to be supported by a stationary mounting member, which in case of a thrust bearing assembly is referred to as a thrust plate. The thrust plate is preferably attached to further stationary components that serve to support the axial load of the shaft. For instance inside an engine a rotating shaft may be supported by a thrust bearing for which the thrust plate is connected to the stationary housing of the engine. Once the shaft rotates the thrust runner rotates relatively to the thrust plate. As in case of the journal bearing, wherein the shaft rotates with respect to the cartridge, an assembly of foils serve as a supporting and lubricating element between the rotating components. For the preferred thrust bearing a top foil is shaped to conceive the thrust runner and is therefore preferably at least over substantial parts flat. The flat sections of the top foil serve as bearing segments to support the thrust runner. In between the bearing segments of the top foil and the thrust runner a thin layer of lubricating gas will form once the shaft starts to rotate. The top foil of the preferred thrust bearing assembly comprises a section that comprises an opening such that the opening angle with respect to the surface of the thrust runner is in between 0° to 60°. Advantageously as for the journal bearing assembly the opening possess an angle of 0° to 60° with respect to the velocity of the flowing lubricating gas. Preferably the section of the top foil that contains the opening is to this end tilted such that it is ascending along the rotational direction of the thrust runner and the direction of the tangential lubricant gas flow. As disclosed herein an opening angle of 0° degrees refers to an opening within a section of a top foil that is perpendicular with respect to the tangential flow of the lubricating gas. An opening angle of 90°, which is not preferred according to the invention, would refer to an opening in the top foil in a section that is parallel to the surface of the thrust runner and thus the tangential velocity of the lubricating gas flow. Advantageously the at least one opening within the top foil with opening angles between 0° and 60° guide part of the lubricating flowing gas to into the space of the layer of the intermediate foil, thus below the top foil. In addition to the lubricant gas flow layer therefore a gas flow with in the layer of the intermediate foils is generated and referred to as the intermediate gas flow layer. The physical law of continuity and mass conservation requires that if part of the lubricating gas leaves the layer between the top foil and the thrust runner to join the intermediate gas flow, it has to be replaced by newly streaming in gas. Therefore due to the openings according to the invention cooler ambient gas continuously streams into the gap between the top foil and the thrust runner joining the flow of lubricating gas. In comparison to bearing devices of the prior art thereby an efficient self-induced cooling is achieved. Such an efficient self-induced cooling cannot be achieved with openings with an opening angle of roughly 90°, since in in this case the lubricating gas hardly enters the layer of the intermediate foil. Advantageously the cooling due to the openings according to the invention does not require any additionally devices or energy to force the cooler ambient air into the lubricating layer. Instead the energy of the rotating shaft is exploited to draw the cooling gas into the lubricating gas. A deleterious heating of the lubricating gas can be thereby avoided.

Technical features and preferred embodiments that have been disclosed for the journal bearing preferably also apply for thrust bearing. A person skilled in the art will therefore recognize that preferred features of the journal bearing can be advantageously used as well in the context of the thrust bearing. For instance, for the journal bearing a preferred opening of 10° to 50° more preferably 20° to 40° has been disclosed. A person skilled in the art will therefore recognize that also for the thrust bearing an opening angle of 10° to 50° more preferably 20° to 40° is preferred. Moreover, surprising technical effects disclosed for features of the journal bearing according to the invention and preferred embodiments can be advantageously exploited for the thrust bearing.

Therefore in a preferred embodiment of the invention the thrust bearing assembly is characterized in that the opening angle is between 10° to 50° and preferably between 20° and 40°.

In another preferred embodiment of the invention the thrust bearing assembly is characterized in that the thrust bearing assembly comprises two or more top foils each exhibiting a top foil trailing section, comprising a descending ramp that forms an angle of 30° to 90° with the surface of the thrust runner and a top foil leading section, comprising an ascending ramp that forms an angle of 30° to 90° with the surface of the thrust runner, wherein the ascending ramp comprises the opening.

In another preferred embodiment of the invention the thrust bearing assembly is characterized in that the ascending ramp of the top foil comprises two or more openings aligned along the radial direction of the thrust runner.

In another preferred embodiment of the invention the thrust bearing assembly is characterized in that the opening has a length to width ratio between 10:1 and 2:1, wherein the length of the opening is the dimension of the opening along the radial direction of the thrust runner.

In another preferred embodiment of the invention the thrust bearing assembly is characterized in that the top foil is made of a nickel-based super alloy preferentially containing an element selected from the group comprising chromium, iron, cobalt, molybdenum, tungsten, tantalum, aluminum, titanium, zirconium, niobium, rhenium, yttrium, vanadium, carbon, boron and/or hafnium and more preferentially the top foil is made of INCONEL^{®} alloy X-750.

In another preferred embodiment of the invention the thrust bearing assembly is characterized in that the intermediate foil is a corrugated foil and constitutes an elastic layer between the top foil and the bearing cartridge.

In another preferred embodiment of the invention the thrust bearing assembly is characterized in that the corrugated foil comprises and/or two or more corrugated foils form at least one slit, which extends circumferentially along the surface of the thrust plate, wherein the opening is aligned with said slit.

In another preferred embodiment of the invention the thrust bearing assembly is characterized in that the intermediate foil is made of a nickel-based super alloy preferentially containing an element selected from the group comprising chromium, iron, cobalt, molybdenum, tungsten, , tantalum, aluminum, titanium, zirconium, niobium, rhenium, yttrium, vanadium, carbon, boron and/or hafnium and more preferentially the top foil is made of INCONEL^{®} alloy X-750.

In another preferred embodiment of the invention the thrust bearing assembly is characterized in that an intermediate foil leading section comprises an intermediate foil fixation area, which is flat, and the top foil leading section comprises a top foil fixation area, which is flat, and the top foil fixation area and the intermediate foil fixation area are fixed to the surface of the thrust plate.

In another preferred embodiment the invention relates to a usage of a thrust bearing assembly according to the invention of preferred embodiments thereof for supporting a rotatable shaft preferably for supporting a rotatable shaft in an air cycle machine, a turbocharger, a microelectromechanical systems, a turboexpander, an aircraft auxiliary power unit, a vehicle range extender, an engine, a compressor, a blower, a milling spindle, a grinding spindle and/or a turbomachine preferably a steam turbine and/or a micro gas turbine.

### DETAILED DESCRIPTION

It should be understood that various alternatives to the embodiments of the invention described herein may be employed in practicing the invention. It is intended that the claims of the invention define the scope of the invention and that the method and apparatus within the scope of these claims and their equivalents be covered thereby.

Without intending to be limiting, the invention will be explained in more detail with reference to examples.

### Brief description of the drawings

- Fig. 1: Schematic presentation of a preferred journal bearing assembly for supporting a rotatable shaft
- Fig. 2: Schematic representation of a sectional view of a preferred journal bearing assembly for supporting a rotatable shaft
- Fig. 3: Schematic representation of a zoomed sectional view of a preferred journal bearing assembly supporting a rotating shaft showing an assembly of top foils and intermediate foils guiding the lubricant and intermediate gas flow
- Fig. 4: Schematic representation of a zoomed sectional view of a preferred journal bearing assembly illustrating how the size of the bearing cavity can be altered by shifting the descending ramp of the top foil
- Fig: 5: Schematic representation of a cutaway drawing of a preferred journal bearing assembly depicting a top foil situated on top of a corrugated foil
- Fig. 6: Schematic representation of a cutaway drawing of a preferred journal bearing assembly with a transparent top foil to show a corrugated foil situated on top of an inner surface of the bearing cartridge.
- Fig. 7: Schematic representation of a section of a preferred journal bearing assembly depicting multiple openings in a top foil that are aligned with slits within the layer of corrugated foils
- Fig. 8: Schematic representation of a section of a preferred journal bearing assembly depicting outward extending slits with a corrugated foil
- Fig. 9: Schematic presentation of a preferred thrust bearing assembly for supporting a rotatable shaft
- Fig. 10: Schematic presentation of two preferred thrust bearing assemblies in between which a thrust runner is arranged for supporting a rotatable shaft
- Fig. 11: Schematic presentation of two preferred thrust bearing assemblies in between which a thrust runner is arranged for supporting a rotatable shaft
- Fig. 12: Schematic representation of a zoomed sectional view of a preferred thrust bearing assembly supporting a rotating shaft showing an assembly of top foils and intermediate foils guiding the lubricant and intermediate gas flow
- Fig. 13: Schematic representation of a cutaway drawing of a preferred thrust bearing assembly comprising multiple openings in a top foil
- Fig. 14: Schematic representation of a cutaway drawing of a preferred thrust bearing assembly showing multiple openings in the top foils that are aligned with slits within the layer of corrugated foils
- Fig. 15: Schematic representation of a preferred thrust bearing assembly showing multiple openings in the top foils that are aligned with slits within the layer of corrugated foils

### Detailed description of the figures

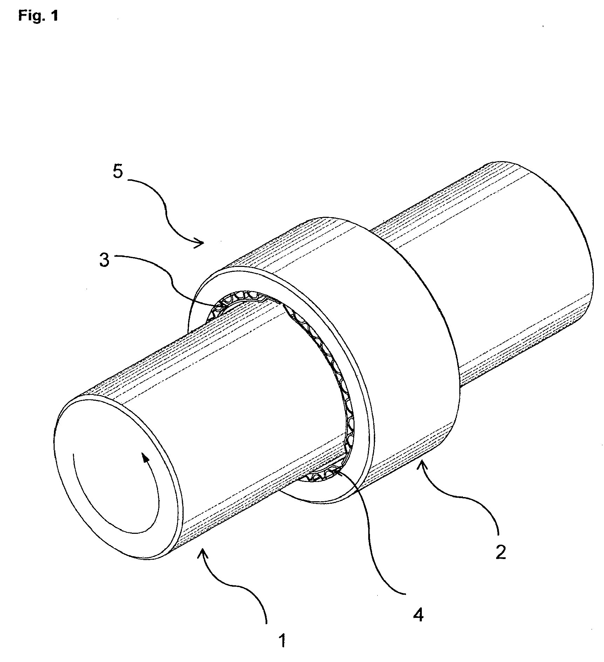

**Fig. 1** shows a preferred journal bearing assembly 5 that supports a rotating shaft 1. The direction of the rotation of the shaft 1 is indicated by an arrow and counterclockwise. The shaft 1 has a cylindrical shape and three top foils 3 (two of which are visible) are shaped to receive the shaft 1. Outward the top foils 3 three corrugated foils 4 are situated acting as an elastic layer between the top foils 3 and the inner surface of a rigid bearing cartridge 2. When the shaft 1 rotates, a gas layer under high hydrodynamic pressure acts as lubricant between the top foil 3 and the surface of the shaft 1.

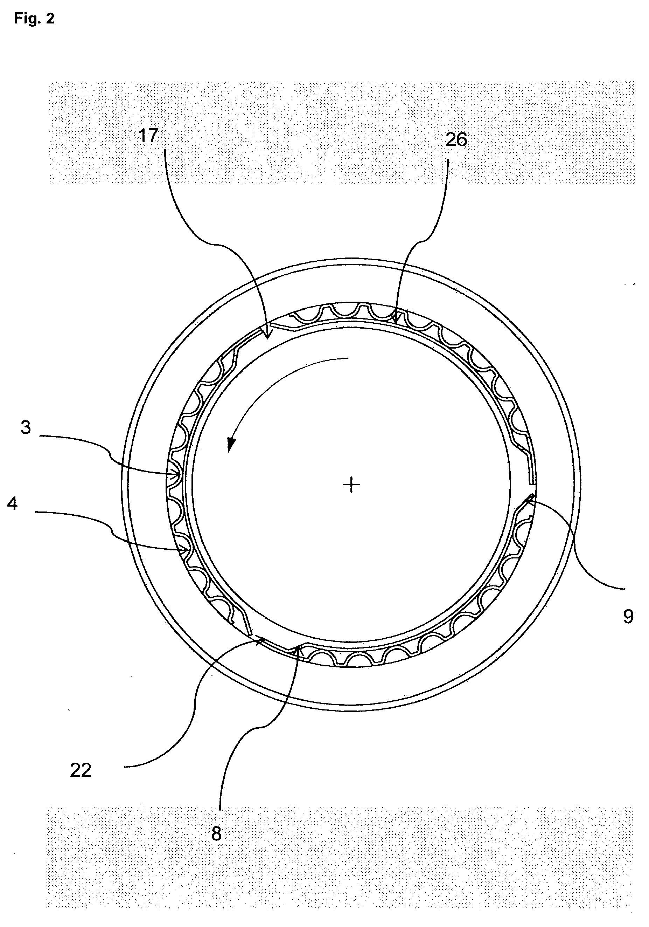

In **Fig. 2** a sectional view of the preferred journal bearing assembly depicted in Fig. 1 is shown. Thereby the positioning of the three top foils 3 on top of three corrugated foils 3 is illustrated. The bearing segments 26 of the top foils 3 correspond to sections of the top foils 3, which are in close proximity to the surface of the shaft 1. The lubricant gas layer is formed between the bearing segment 26 and the surface of the shaft 1. The load of the shaft 1 is thus transmitted to the bearing segments 26 of the top foils 3, which are supported by the bumps of the corrugated foils 4. Additionally the leading section of each top foil 3 comprises a top foil leading flat section 22 and an ascending ramp 8. The trailing section of each top foil 3 comprise a descending ramp 9. Thereby a bearing cavity 17 is formed, which corresponds to the space in which the top foils 3 are not in close proximity to the surface of the shaft 1.

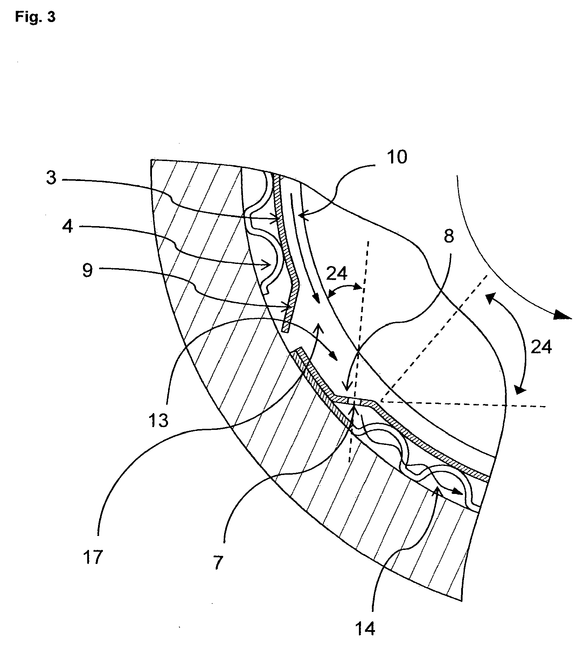

**Fig. 3** illustrates the flow pattern of the gases in close proximity to the bearing cavity 17 due to the rotation of the shaft 1 in the direction illustrated by an arrow. The ascending ramp 8 comprises an opening 7. The ascending ramp forms an angle with the surface of the shaft. Therefore the opening 7 forms an opening angle 24 with the surface of the shaft 1 and thus with the tangential velocity component of the lubricating gas 10. Part of the lubricating gas enters through the opening 7 the space formed by the layer of the corrugated foil 4. In consequence an intermediate gas flow 14 illustrated by the waved arrow is generated. Due to the law of continuity ambient gas 13 joins the lubricant gas at the location of the bearing cavity 17. In case the temperature of the lubricant gas increases due to friction with the surface of the shaft 1 and the top foil 3 the mixing of the lubricant gas with a cooler ambient gas 13 leads to a self-induce cooling effect of the journal bearing assembly.

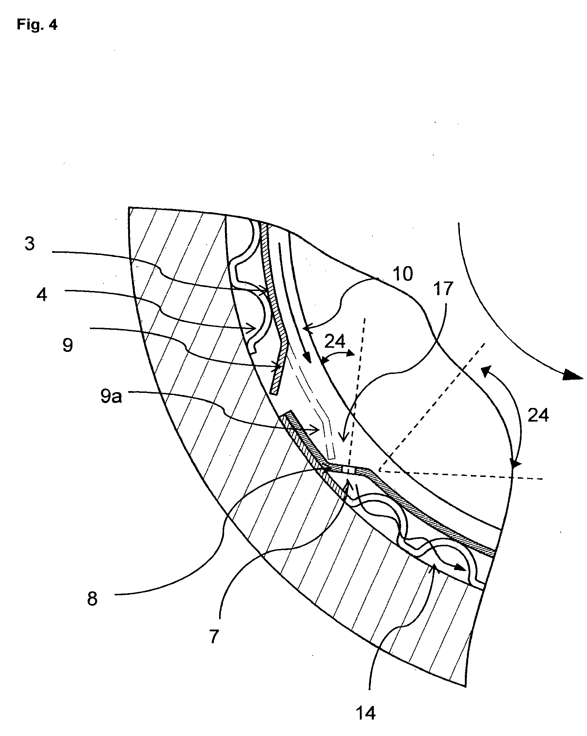

**Fig. 4** illustrates as Fig. 3 the flow pattern of the gases in close proximity to the bearing cavity 17. However the transparent descending ramp 9a illustrates how the position of the descending ramp 9 can be shifted with respect to the ascending ramp 8 in order to change the size of the bearing cavity 17. The size of the bearing cavity 17 can be optimized to increase the intermediate gas flow 14 and thereby the effect of self-induced cooling.

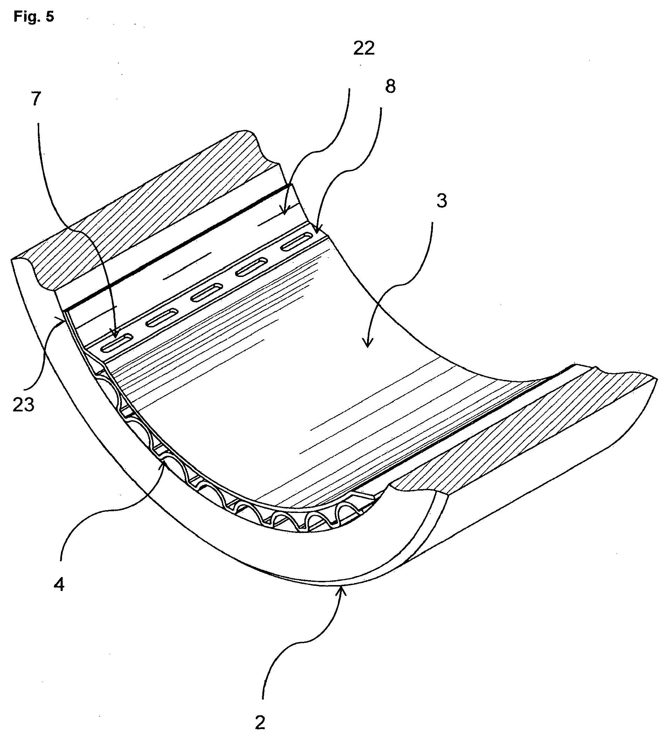

Fig. 5 shows a cutaway drawing of a preferred journal bearing assembly 5 comprising five openings 7 within the ascending ramp 8 of the top foil 3. The top foil fixation area 22 is spot-welded together with the intermediate foil fixation area 23 to the inner surface of the bearing cartridge 2.The five openings 7 have a length to width ratio of 3:1, wherein the length corresponds to the extension along the axial direction of the shaft (not shown), and are aligned along said axial direction.

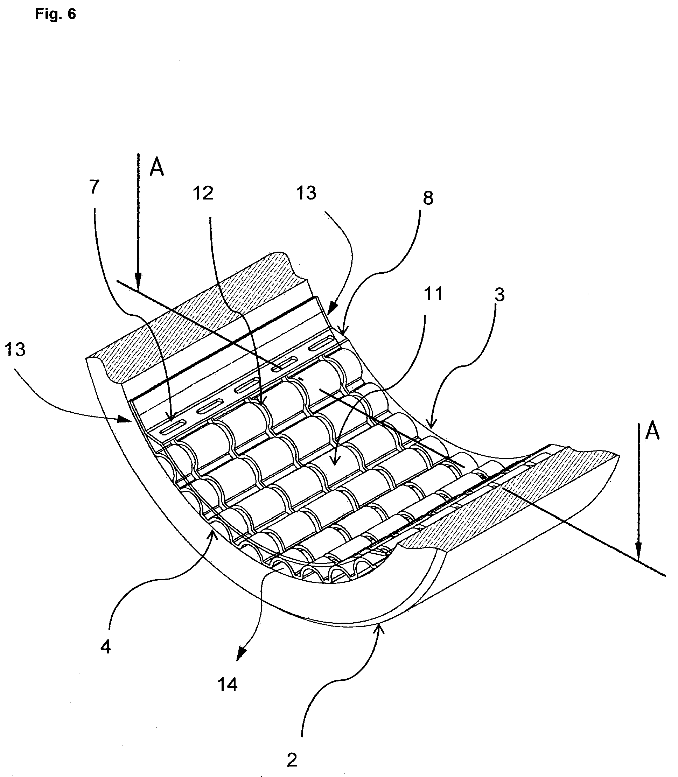

Fig. 6 illustrates the same cutaway drawing as Fig. 5, except that part of the top foil 3 is depicted transparent to illustrate the corrugated foil 4 underneath the top foil 3. The corrugated foil 4 comprises multiple bump elements 11, which serve as elastic elements to support the top foil 3 and thus the shaft (not shown). The corrugated foil 4 comprises further five slits 12 in between the bump elements 11. The slits 12 are aligned with the openings 7 and guide the intermediate gas flow 14. Since the corrugated foil 4 comprises axial opening the intermediate gas flow 14 exits the layer of the intermediate foils. Due to the law of continuity cooler ambient gas flow 13 enters the layer of the intermediate foils and reduces the temperature of the journal bearing assembly.

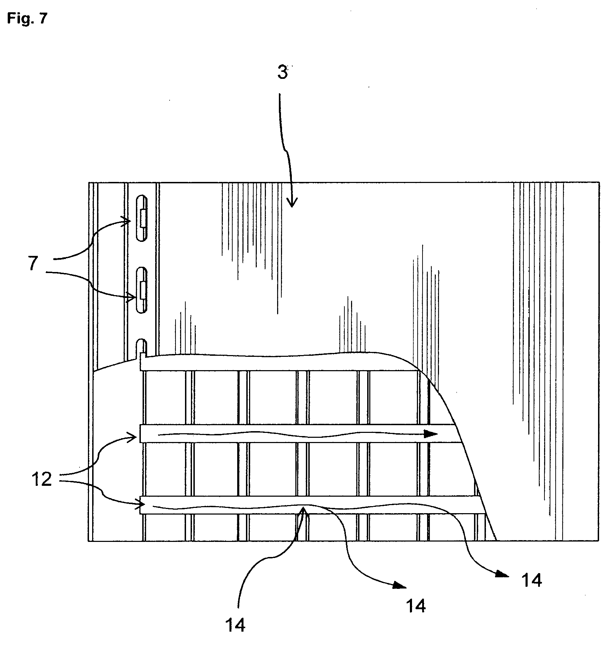

**Fig. 7** illustrates the alignment of the openings 7 with the slits 12. To this end the spacing of the openings matches the spacing of the slits. The intermediate gas flow 14 is guided by the slits and exits the intermediate foil layer at axial openings (bottom of the scheme) leading to an entering of a cooler ambient gas 13 due to the law of continuity. The descending ramp 9 prevents the intermediate gas flow 14 to enter the next bearing segment (not shown). The descending ramp therefore increases the stream of the ambient gas 13 to cool the journal bearing assembly.

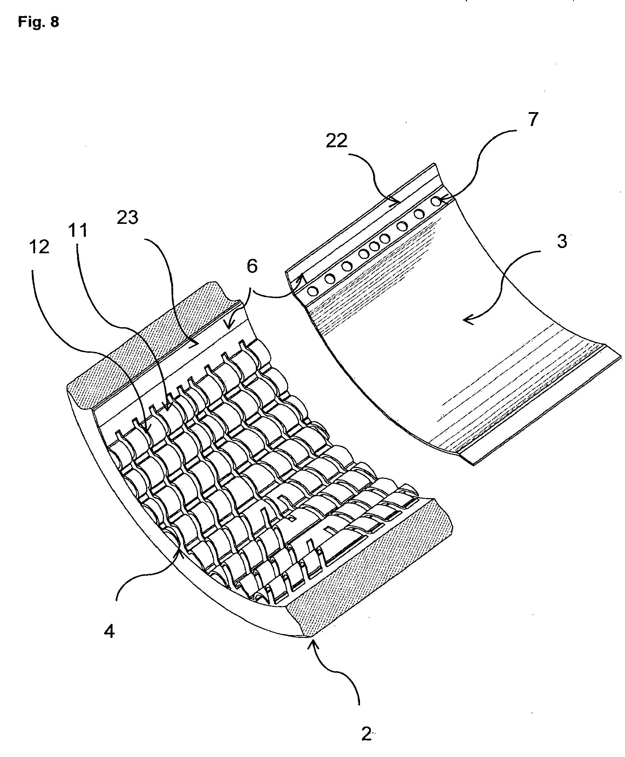

**Fig. 8** is a cutaway drawing of a preferred journal bearing assembly, wherein the top foil 3 is depicted for illustrative reasons apart from the rest of the journal bearing assembly. The top foil 3 comprises nine openings 7, which when assembled on the corrugated foil 4, align with the corresponding slits 12. In this embodiment the slits 12 are arranged outward to promote the exit of the intermediate gas flow 14 from the layer of the intermediate foils. Such a slit pattern therefore increases the stream of ambient gas 13 to cool the journal bearing assembly.

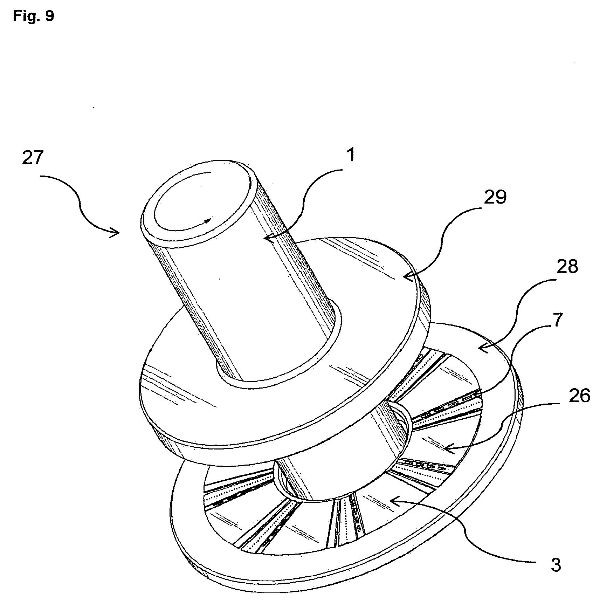

**Fig. 9** shows a preferred thrust bearing assembly that axially supports a rotating shaft 1. The direction of the rotation of the shaft 1 is indicated by an arrow and counterclockwise. A thrust runner 29 in form of a disc is attached to the cylindrically shaped shaft 1. The axial load of the shaft is therefore transmitted to via the thrust runner 29 to a thrust plate 26, which may acts as a stationary mount. Multiple top foils 3 are situated on top of corrugated foils 4 that act as elastic layer between the top foils 3 and surface thrust plate 26. When the shaft 1 rotates the thrust runner 29 rotates with the shaft 1 and a gas layer under high hydrodynamic pressure acts as lubricant between the top foils 3 and the surface thrust runner 29.

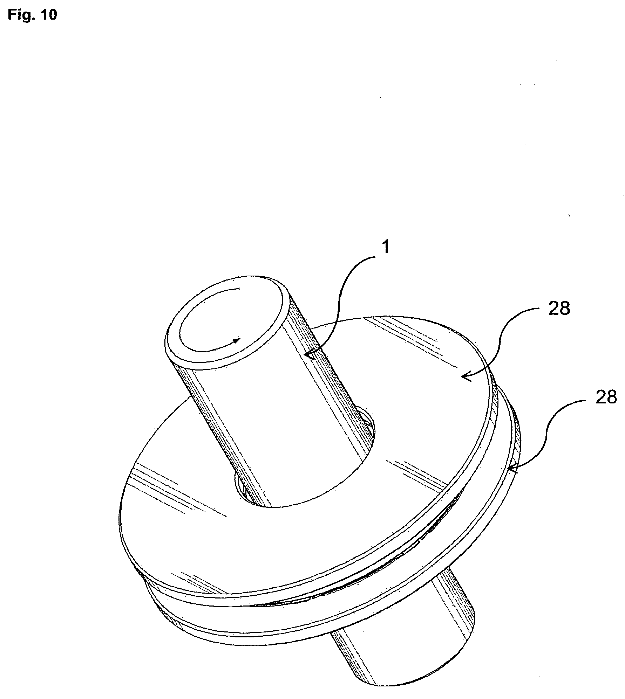

**Fig. 10** shows two preferred thrust bearings that support the load of the rotating shaft 1 in both axially directions. To this end the thrust runner 29 is arranged in between the two preferred thrust bearings, each comprising a thrust plate 28 and an assembly of top foils 3 and intermediate foils 4 (not visible).

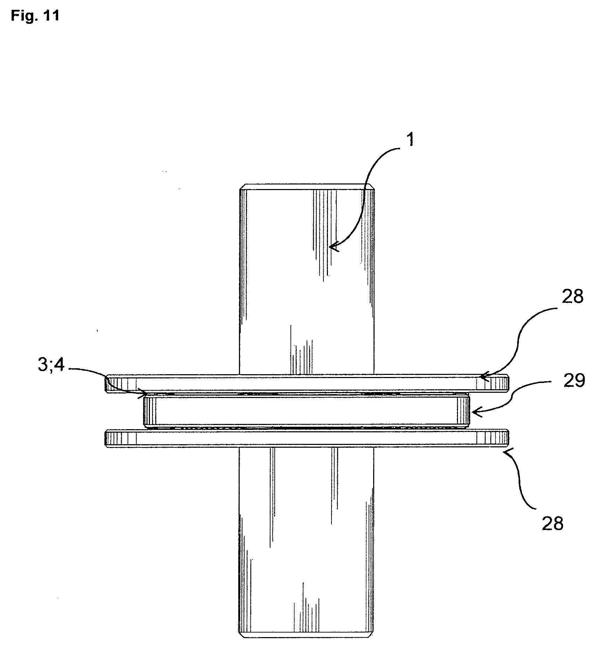

**Fig. 11** depicts a side view of the two preferred thrust bearings support the load of the rotating shaft 1 shown in Fig. 10. In this view the arrangement of the thrust runner 29 in between the two preferred thrust bearings 27 is visible. The thrust bearings 27 comprising each a thrust plate 28 and an assembly of top foils 3 and intermediate foils 4, schematically depicted as a thin layer.

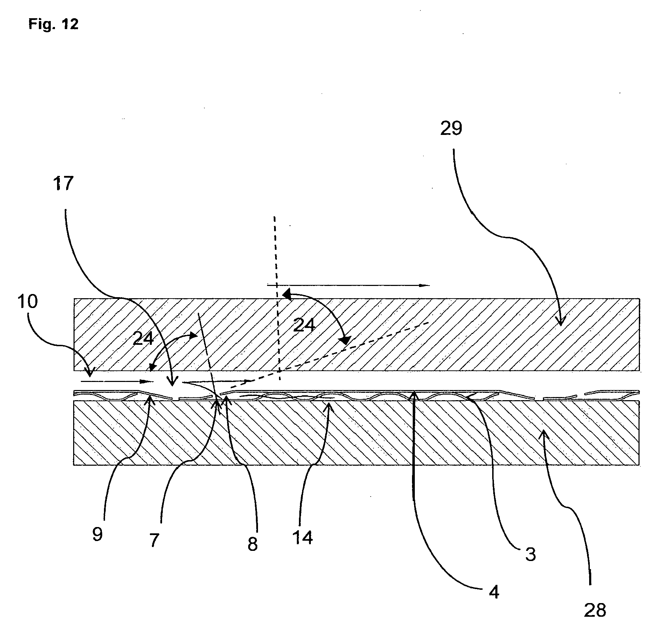

**Fig. 12** illustrates the flow pattern of the gases in close proximity to the bearing cavity 17 due to the rotation of thrust runner 29 in the direction illustrated by the arrow above the thrust runner 29. The ascending ramp 8 comprises an opening 7. The ascending ramp forms an angle with the surface of thrust runner 29. Therefore the opening 7 forms an opening angle 24 with the surface of thrust runner 29 and thus with the velocity component of the lubricating gas 10. Part of the lubricating gas enters through the opening 7 the space formed by the layer of the corrugated foil 4. In consequence an intermediate gas flow 14 illustrated by the waved arrow is generated. Due to the law of continuity ambient gas 13 joins the lubricant gas at the location of the bearing cavity 17. In case the temperature of the lubricant gas increases due to friction with the surface of the thrust runner and the top foil 3 the mixing of the lubricant gas with a cooler ambient gas 13 leads to a self-induce cooling effect of the journal bearing assembly.

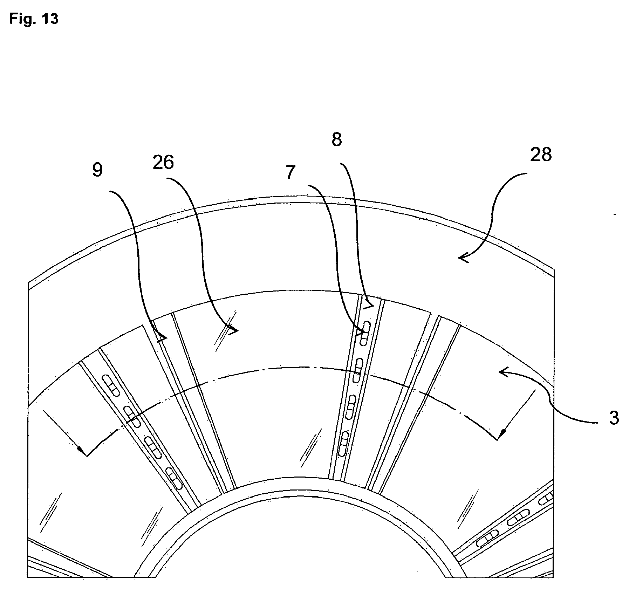

**Fig. 13** is a cutaway drawing of a preferred thrust bearing assembly depicting the top view on the thrust plate 28 onto which intermediate foils (not visible) and top foils 3 are assembled. Each top foil 3 comprises four openings 7 within the ascending ramp 8 of the top foil 3. The four openings 7 have a length to width ratio of 3:1, wherein the length corresponds to the extension along the radial direction the thrust runner (not shown), which is equal to the radial direction of the thrust plate (28), and are aligned along said radial direction.

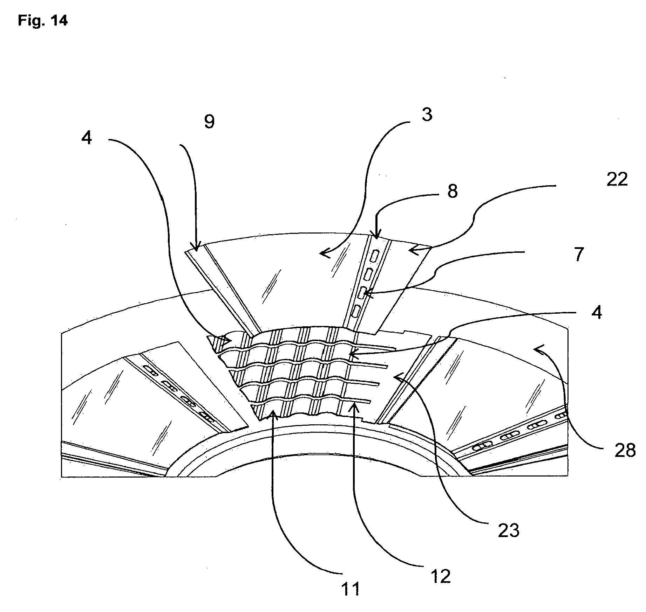

**Fig. 14** is a cutaway drawing of a preferred thrust bearing assembly, wherein one top foil 3 is depicted for illustrative reasons apart from the rest of the thrust bearing assembly. The top foil 3 comprises four openings 7, which when assembled on the corrugated foil 4, align with the corresponding slits 12 in between the bump elements 11. To this end the top foil fixation area 22 is spot-welded together with the intermediate foil fixation area 23 to the inner surface of the thrust plate 28. Thereby a precise alignment of the slits 12 with the openings 7 is assured and during the rotation part of the lubricant gas is advantageously guided in the layer of the corrugated foil 4 to form an intermediate gas flow. Since the corrugated foil 4 comprises radials openings the intermediate gas flow can exit the layer of the corrugated foil. This is additionally assisted by the descending ramp 9 that prevents the intermediate gas flow to enter the next bearing cavity. Due to the law of continuity cooler ambient gas flow 13 enters the layer of the corrugated foils and reduces the temperature of the journal bearing assembly.

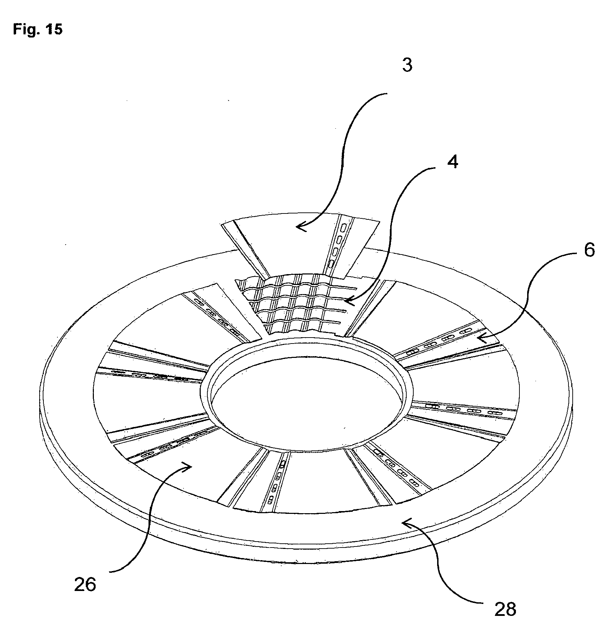

**Fig. 15** is a schematic presentation of the preferred thrust bearing assembly for which Fig. 14 showed a cutaway drawing. One top foil 3 is depicted for illustrative reasons apart from the rest of the thrust bearing assembly. The top foil 3 comprises four openings 7, which when assembled on the corrugated foil 4, align with the corresponding slits 12 in between the bump elements 11. In total the depicted thrust bearing assembly comprises eight top foils and eight corrugated foils 4, one of which is visible. Thereby the thrust runner and thus the shaft is supported axially by eight bearing segments in between which eight bearing cavities allow for a self-induced cooling.

### LIST OF REFERENCE NUMBERS

- 1: rotatable shaft
- 2: bearing cartridge
- 3: top foil
- 4: intermediate foil
- 5: journal bearing assembly
- 6: foil fixing area
- 7: opening
- 8: ascending ramp
- 9: descending ramp
- 10: tangential velocity component of the lubrication gas
- 11: bump element
- 12: slit
- 13: ambient gas flow
- 14: intermediate gas flow
- 17: bearing cavity
- 21: top foil bearing segment
- 22: top foil fixation area
- 23: intermediate foil fixation area
- 24: opening angle
- 26: bearing segment
- 28: thrust plate
- 29: thrust runner

## Claims

1. Journal bearing assembly (5) for supporting a rotatable shaft (1), comprising a plurality of foils, comprising at least one top foil (3) shaped to receive the rotatable shaft (1) and at least one intermediate foil (4) outward the top foil (3), and a bearing cartridge (2) with an inner concave surface enclosing the intermediate foil (4),
**characterized in that**
the top foil (3) exhibits at least one opening (7), in a section of said top foil (3), such that the opening (7) displays an opening angle (24) of 0° to 60° with respect the surface of the rotatable shaft (1).

2. Journal bearing assembly (5) according to the previous claim,
**characterized in that**
the opening angle (24) is between 10° to 50° and preferably between 20° and 40°.

3. Journal bearing assembly (5) according to any one of the preceding claims
**characterized in that**
the journal bearing assembly (5) comprises two or more top foils (3) each exhibiting a top foil trailing section, comprising a descending ramp (9) that forms an angle of 30° to 90° with the surface of the rotatable shaft (1) and a top foil leading section, comprising an ascending ramp (8) that forms an angle of 30° to 90° with the surface of the rotatable shaft (1), wherein the ascending ramp (8) comprises the opening (7).

4. Journal bearing assembly (5) according to the previous claim,
**characterized in that**
the ascending ramp (9) of the top foil (3) comprises two or more openings (7) aligned in a direction along the cylindrical axis of the rotatable shaft (1).

5. Journal bearing assembly (5) according to any one of the preceding claims,
**characterized in that**
the opening (7) has a length to width ratio between 10:1 and 2:1, wherein the length of the opening (7) is the dimension of the opening (7) along the direction of the cylindrical axis of the rotatable shaft (1).

6. Journal bearing assembly (5) according to any one of the preceding claim,
**characterized in that**
the top foil (3) is made of a nickel-based super alloy preferentially containing an element selected from the group comprising chromium, iron, cobalt, molybdenum, tungsten, tantalum, aluminum, titanium, zirconium, niobium, rhenium, yttrium, vanadium, carbon, boron and/or hafnium and more preferentially the top foil (3) is made of INCONEL^{®} alloy X-750

7. Journal bearing assembly (5) according to any one of the preceding claims
**characterized in that**,
the intermediate foil (4) is a corrugated foil and constitutes an elastic layer between the top foil (3) and the bearing cartridge (2).

8. Journal bearing assembly (5) according to the previous claim
**characterized in that**
the corrugated foil comprises and/or two or more corrugated foils form at least one slit (12), which extends circumferentially along the surface of the bearing cartridge (2), wherein the opening (7) is aligned with said slit (12).

9. Journal bearing assembly (5) according to any one of the preceding claims
**characterized in that**
the intermediate foil (4) is made of a nickel-based super alloy preferentially containing an element selected from the group comprising chromium, iron, cobalt, molybdenum, tungsten, tantalum, aluminum, titanium, zirconium, niobium, rhenium, yttrium, vanadium, carbon, boron and/or hafnium and more preferentially the intermediate foil is made of INCONEL^{®} alloy X-750.

10. Journal bearing assembly (5) according to any of the preceding claims
**characterized in that**
an intermediate foil leading section comprises an intermediate foil fixation area (23), which is flat, and the top foil leading section comprises a top foil fixation area (22), which is flat, and the top foil fixation area (22) and the intermediate foil fixation area (23) are fixed to the inner surface of the bearing cartridge (2).

11. Using a journal bearing assembly (5) according to any of the claims **1 - 10** for supporting a rotatable shaft (1) preferably for supporting a rotatable shaft (1) in an air cycle machine, a turbocharger, a microelectromechanical systems, a turboexpander, an aircraft auxiliary power unit, a vehicle range extender, an engine, a compressor, a blower, a milling spindle, a grinding spindle and/or a turbomachine preferably a steam turbine and/or a micro gas turbine.

12. Thrust bearing assembly (27) for supporting a rotatable shaft (1), comprising a thrust runner (29) attached to the rotatable shaft (1), a thrust plate (2) and a plurality of foils, comprising at least one top foil (3) shaped to receive the thrust runner (29) and at least one intermediate foil (4) situated in between the top foil (3) and the thrust plate (28),
**characterized in that**
the top foil (4) exhibits at least one opening (7), in a section of said top foil (3), such that the opening (7) displays an opening angle (24) of 0° to 60° with respect the surface of the thrust runner (29).

13. Thrust bearing assembly (27) according to claim 13,
**characterized in that**
the opening angle (24) is between 10° to 50° and preferably between 20° and 40°.

14. Thrust bearing assembly (27) according to claim 13 or 14
**characterized in that**
the thrust bearing assembly (27) comprises two or more top foils (3) each exhibiting a top foil trailing section, comprising a descending ramp (9) that forms an angle of 30° to 90° with the surface of the thrust bearing and a top foil leading section, comprising an ascending ramp (8) that forms an angle of 30° to 90° with the surface of the thrust bearing, wherein the ascending ramp (8) comprises the opening (7).

15. Using a thrust bearing assembly (27) according to any of the claims 12 -14 for supporting a rotatable shaft (1) preferably for supporting a rotatable shaft (1) in an air cycle machine, a turbocharger, a microelectromechanical systems, a turboexpander, an aircraft auxiliary power unit, a vehicle range extender, an engine, a compressor, a blower, a milling spindle, a grinding spindle and/or a turbomachine preferably a steam turbine and/or a micro gas turbine.
